# EUROPEAN PATENT APPLICATION

(11) **EP 2 113 683 A2**
(43) Date of publication of application: **04.11.2009**
(21) Application number: 09159114.9
(22) Date of filing: 29.04.2009
(51) Int. Cl.: F16H 1/28

(54) **Apparatus and method for improving radial stresses in a gear transmission mounting**

(30) Priority: 29.04.2008 GB 0807778
(71) Applicant: Romax Technology Limited, Nottingham, Nottinghamshire NG7 2PZ (GB)
(72) Inventor: Poon, Siu Yun, Nottingham, Nottinghamshire NG7 1EY (GB); Barnes, Michael Cosmo, Doncaster, Yorkshire DN10 4NB (GB)
(74) Representative: Thould, Lee Matthew

(57) **Abstract**

There is provided a pin and mounting assembly for supporting a gear of an epicyclic or parallel shaft transmission. The pin and mounting assembly comprises: a mounting (4) which has a first interference surface; and a pin (2) which has a second interference surface. The second interference surface is adapted for engagement with the first interference surface to establish an interference fit (6). The first and/or second interference surface defines an open ended volume such as a cylinder, cuboid or frustum and a longitudinal axis of the interference fit is defined as extending through the volume. A section through at least a part of the first and/or second interference surface on the longitudinal axis describes a curved interference depth with at least one maximum and/or minimum.

## Description

Embodiments of the invention relate to the improved distribution of radial stresses within a cantilevered pin and mounting assembly used to support a gear of an epicyclic transmission. The better distribution of radial stresses leads to improvements in the maximum working load of such transmissions and to improvements in the amount of interference fit which can be established.

Embodiments of the invention are applicable to epicyclic transmissions where flexible shafts are used to mount pinions or planet gears that run between a sun gear and a ring gear, and to parallel shaft transmissions where the pinion is mounted between an input and an output shaft.

Flexible pin technology used for the support of the pinion gears of epicyclic gear transmissions is well known in the art.

If an epicyclic transmission arrangement has more than three planet pinions the pinion system is over constrained even when one of the elements, sun gear, ring gear (annulus) or pinion mounting, is allowed to float. Manufacturing tolerances will typically cause each pinion to carry unequal loads unless a degree of radial flexibility is introduced into the mountings of the transmission elements. A flexible planet pin, allowing radial excursion from the mounting position, has been used to introduce a sufficient degree of flexibility to better balance the loads.

As epicyclic transmissions come under load the shafts deflect and the gears do not then run perfectly together. It is possible to make micro geometry corrections to the gears to account for the deflections but the correction can only be optimised for a limited range of load conditions. Flexible pin arrangements can compensate for misalignment errors, over a large range of loads, without the gears displaying heavy edge loading.

Flexible pin technology can also be used to mount an idler pinion between two shafts to compensate progressively for increasing shaft misalignment under load.

In epicyclic transmissions cantilevered mounting of the planet pinions allows more pinions to be used than in a system where the pinions are straddle mounted and space is taken up by the carrier.

Typically, cantilever mounted flexible pins used in epicyclic transmissions are mounted in a housing or a gear carrier using an interference fit. When the planet pinions of an epicyclic transmission are under load the radial stresses, or other forces, experienced in the interference fit are non-uniformly distributed in the pin and the mounting and may exceed the maximum permissible radial stresses if the total interference fit is too large.

The term "total interference fit" comprises the amount of radial stress (or other measurable forces) in a plane passing through the central axis of the interference fit summed or integrated over an axial length of the interference fit at the intersections of the interference fit and the plane. The total interference fit may be represented by the summation of the radial stresses experienced at a number of uniformly distributed discrete points along the axial length defined above. The total interference fit may also be represented by an integration of the radial stresses experienced at a number of uniformly distributed discrete points along the axial length defined above.

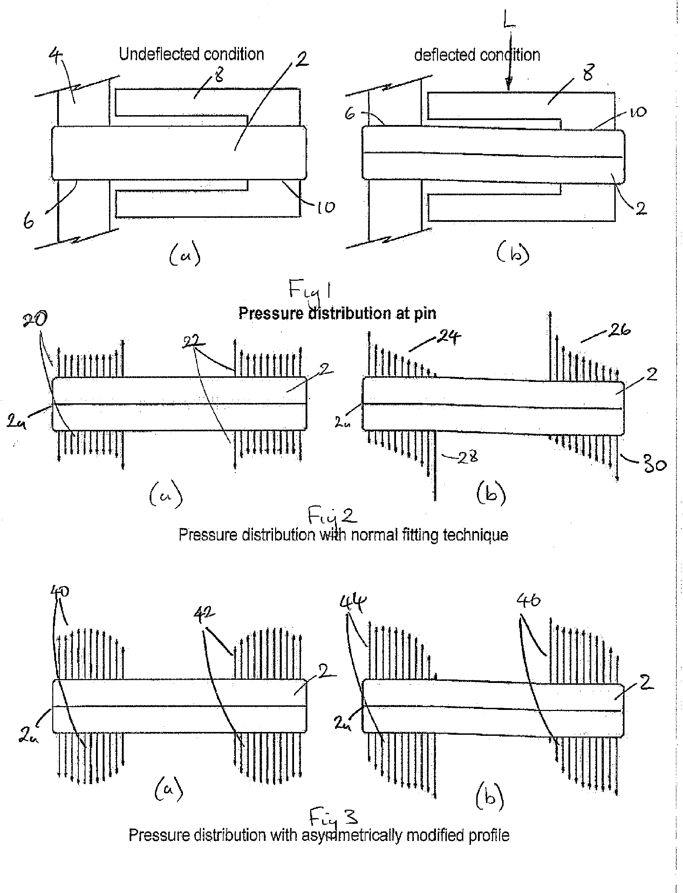

Referring to figures 1 a and 1 b there is shown a cylindrical pin 2, a first end of the pin 2 being mounted into a mounting 4 by a first interference fit 6. A load bearing member 8 is secured to a second end of the pin 2 by a second interference fit 10. Figure 1 a shows the pin and mounting assembly under no load, and figure 1 b shows the assembly when subjected to load L. In figure 1 b the pin 2 is seen to deform under load L.

In an epicyclic gear transmission, mounting 4 could, for example, be a planet gear carrier and load bearing member 8 could be a sleeve within a planet gear.

Figures 2a and 2b show a schematic representation of the distribution of radial stresses, in the plane of the cross-section, in the first and second interference fits of a pin and mounting assembly known in the art, both under no load (figure 2a) and under load L (figure 2b). The interference fit of figures 2a and 2b is a uniform interference fit i.e. an interference fit with a substantially uniform interference depth.

The term "interference depth" encompasses the extent to which a male interference fastening element is manufactured larger than the corresponding female interference fastening element to produce an interference fit and therefore includes a distance of compression of one or both of the male and female fastening elements when engaged with one another.

Typically interference depths in pin and mounting assemblies used in epicyclic transmissions are in the order of micrometres. An exemplary interference depth is 115 micrometres when using a pin of diameter 185 millimetres. This exemplary interference depth is measured diametrically, i.e. the radial interference depth is 57.5 micrometres.

The amount of permissible interference depth or interference fit between a pin and mounting may be affected by the materials used. Typically a pin may be manufactured from high quality shaft steel and a mounting may be manufactured from steel or spheroidal graphite iron. Typical interference depths seen when using these materials may be approximately 0.06% of the pin diameter or greater.

Limits on the maximum amount of permissible interference fit in a pin and mounting assembly may also depend on the bending moments expected to be applied to a pin when in use. Large bending moments will result in radial stresses which, at particular locations in the interference fit will add to the radial stresses imposed on the pin and mounting by the interference fit. The radial stresses in the pin and mounting assembly must be limited so as not to exceed or be too close to the plastic yield stress of the material of the pin or mounting.

The radial stresses 20, 22 of the first and second interference fits 6, 10 are substantially uniformly distributed across the full length of each interference fit. Increases in radial stresses are seen at the ends of the interference fits, which are caused by the end effects of an interference fit. Such effects are well documented in the prior art. The arrows of figures 2a and 2b show the radial stresses experienced at the top and bottom of the interference fits. Radial stresses may also be experienced over the entire interference surface.

The term "interference surface" encompasses a surface of either a male or female interference fastening element which is in contact with the interference surface of the corresponding element when an interference fit has been established.

Typical interference fits of pin and mounting assemblies include an interference surface which defines an open ended, tube-like, volume with a regular cross section. In particular examples, the cross section of the open ended volume formed by the interference surface may be circular, elliptical, square or rectangular. Accordingly the open ended volume may define a cylinder, cone or frustum, or a cuboid.

Figure 2b shows a schematic representation of the distribution of the radial stresses in the uniform interference fits as a function of position along the axial length of the interference surface when under load L. The bending moment resulting from load L distributes the radial stresses along the interference surface in a more non-uniform manner than seen in figure 2a. The radial stresses 24 at the top of the first interference fit 6 can be seen to be greater toward the first end 2a of the pin 2, decreasing along the length of the interference fit. Conversely, the radial stresses 28 at the bottom of the first interference fit 6 are reduced toward the first end 2a of the pin 2, increasing along the length of the interference fit.

A similar distribution of radial stresses 26, 30 is represented by the arrows on the top and bottom of the second interference fit 10.

The high radial stresses experienced in the uniform interference fits when under load may result in von Mises stresses which exceed the plastic yield stresses of the materials used in the manufacture of the pin, mounting or load bearing member. This may lead to the plastic deformation of one or more of these elements, adversely affecting their engagement and the operability of the assembly.

It would be desirable to overcome or mitigate at least some of the problems in the prior art stated above.

According to an aspect of the invention there is provided a pin and mounting assembly for supporting a gear of an epicyclic or parallel shaft transmission, the pin and mounting assembly comprising: a mounting having a first interference surface; and a pin having a second interference surface, wherein the second interference surface is adapted for engagement with the first interference surface to establish an interference fit, and wherein the first and/or second interference surface defines an open ended volume, a longitudinal axis of the interference fit extending through the volume, and a section through at least a part of the first and/or second interference surface on the longitudinal axis describes a curved interference depth with at least one maximum and/or minimum.

The interference depth of at least a part of the first and/or second interference surface may be substantially convex along the longitudinal axis of the interference fit.

The interference depth of at least a part of the first and/or second interference surface may be substantially concave along the longitudinal axis of the interference fit.

The minimum interference depth of the at least part of the first and/or second interference surface may be less than 80% of the maximum interference depth.

The minimum interference depth of the at least part of the first and/or second interference surface may be less than 60% of the maximum interference depth.

The minimum interference depth of the at least part of the first and/or second interference surface may be greater than 30% of the maximum interference depth.

The minimum interference depth of the at least part of the first and/or second interference surface may be greater than 50% of the maximum interference depth.

The total interference fit may be increased by at least a factor of 1.2 over a nominal interference fit.

The total interference fit may be increased by at least a factor of 1.6 over a nominal interference fit.

The total interference fit may be increased by at least a factor of 1.9 over a nominal interference fit.

The first interference surface may include the inner surface of a sleeve.

The second interference surface may include the outer surface of the pin.

The open ended volume formed by the first and/or second interference surface may be cylindrical.

The open ended volume formed by the first and/or second interference surface may be a frustum.

The mounting may form part of a housing.

The mounting may form part of a gear carrier.

According to another aspect of the invention there is provided a pin for use in a pin and mounting assembly as described in any of the preceding paragraphs.

According to another aspect of the invention there is provided a mounting for use in a pin and mounting assembly as described in any of the preceding paragraphs.

According to another aspect of the invention there is provided a method of manufacturing a pin and mounting assembly for supporting a gear of an epicyclic or parallel shaft transmission, the method comprising: providing a mounting having a first interference surface; and providing a pin having a second interference surface, wherein the second interference surface is adapted for engagement with the first interference surface to establish an interference fit, and wherein the first and/or second interference surface defines an open ended volume, a longitudinal axis of the interference fit extending through the volume, and a section through at least a part of the first and/or second interference surface on the longitudinal axis describes a curved interference depth with at least one maximum and/or minimum.

The step of determining the profile of the curved interference depth with at least one maximum and/or minimum may use finite element analysis techniques.

According to another aspect of the invention there is provided a method for determining the profile of a first and/or second interference surface of a contoured interference fit for achieving a greater total interference fit and better distribution of forces within the contoured interference fit under load, the method comprising: a) determining maximum permissible forces within an interference fit; b) producing a model of a uniform interference fit wherein the first and/or second interference surface defines an open ended volume, a longitudinal axis of the interference fit extending through the volume, and a section through at least a part of the first and/or second interference surface on the longitudinal axis describes an interference depth; c) shaping the profile of a first and/or second interference surface of the modelled interference fit such that an interference depth is defined with at least one maximum and/or minimum to produce a model of a contoured interference fit; d) executing the model of the contoured interference fit and calculating the simulated forces in the contoured interference fit; e) repeating steps c) and d) until desired calculated forces, which do not exceed the maximum permissible forces, are achieved in the contoured interference fit; and f) manufacturing the first and/or second interference surfaces of an actual interference fit to correspond to the modelled contoured interference fit.

The step of calculating the maximum permissible forces within an interference fit may be based on the characteristics of the materials used in the interference fit.

The desired forces may include an increase in the total interference fit of at least a factor of 1.2.

The desired forces may include an increase in the total interference fit of at least a factor of 1.6.

The desired forces may include an increase in the total interference fit of at least a factor of 1.9.

According to another aspect of the invention there is provided a pin and mounting assembly generally as herein described, with reference to and/or as illustrated in the accompanying drawings.

According to another aspect of the invention there is provided a method for optimising the forces in an interference fit of a pin and mounting assembly supporting a gear of an epicyclic or parallel shaft transmission generally as herein described, with reference to and/or as illustrated in the accompanying drawings.

According to another aspect of the invention there is provided a method for determining the profile of a first and/or second interference surface of an interference fit for achieving a greater total interference fit and better distribution of forces within the interference fit under load generally as herein described, with reference to and/or as illustrated in the accompanying drawings.

There now follows a description of embodiments of the invention, by way of non-limiting examples, with reference being made to the accompanying drawings in which:
figure 1 a shows a section through a pin and mounting assembly when the pin is under no load;
figure 1b shows a section through a pin and mounting assembly when the pin is under load L;
figure 2a shows a schematic representation of the radial stresses experienced in uniform interference fits under no load;
figure 2b shows a schematic representation of the radial stresses experienced in uniform interference fits under load L;
figure 3a shows a schematic representation of the radial stresses experienced in contoured interference fits under no load;
figure 3b shows a schematic representation of the radial stresses experienced in contoured interference fits under load L;
figure 4 shows a schematic section on a longitudinal axis of a pin for a pin and mounting assembly showing the profile of a first exemplary interference surface;
figure 5 shows a schematic section on a longitudinal axis of a pin for a pin and mounting assembly showing the profile of a second exemplary interference surface;
figure 6 shows a representation of a machined surface;
figure 7 shows radial stress in a uniform interference fit when the pin is under no load and when the pin is under a load of 310 kilo Newtons at distance of 400 millimetres from the fit;
figure 8 shows radial stress in a contoured interference fit according to figure 4 when the pin is under no load and when the pin is under a load of 310 kilo Newtons at distance of 400 millimetres from the fit; and
figure 9 shows radial stress in a contoured interference fit according to figure 5 when the pin is under no load and when the pin is under a load of 310 kilo Newtons at distance of 400 millimetres from the fit;

Referring to figures 3a and 3b, an example of a contoured interference fit in which the radial stresses are more uniformly distributed when under load, and in which a greater total radial stress is shown. Figure 3a shows the pin and mounting assembly under no load and figure 3b shows the assembly under load L.

The expression "contoured interference fit" encompasses one in which the first and/or second interference surface defines an open ended volume, a longitudinal axis of the interference fit extending through the volume, and a section through at least a part of the first and/or second interference surface on the longitudinal axis describes a curved interference depth with at least one maximum and/or minimum.

The interference depth of each of the first and second interference fits of the pin and mounting assembly of figures 3a and 3b are contoured i.e. varied according to a specific design such that the radial stresses experienced in each of the interference fits is more uniformly distributed when the pin and mounting assembly is under load L, and a greater total interference fit may be achieved.

In figure 3a the radial stresses 40, 42 in the first and second interference fits 6, 10 are greater when integrated over the entire length of the interference fits than those seen in figure 2. This establishes a greater total interference fit, which increases resistance to shear motion and increases the strength of the fit. When subjected to load L the design of the interference depth of each interference fit distributes the radial stresses 44, 46 experienced in the first and second interference fits 6, 10 more evenly than those in figure 2b with the maximum values of radial stress at the extremities of the fit being reduced whilst maintaining greater total interference fit.

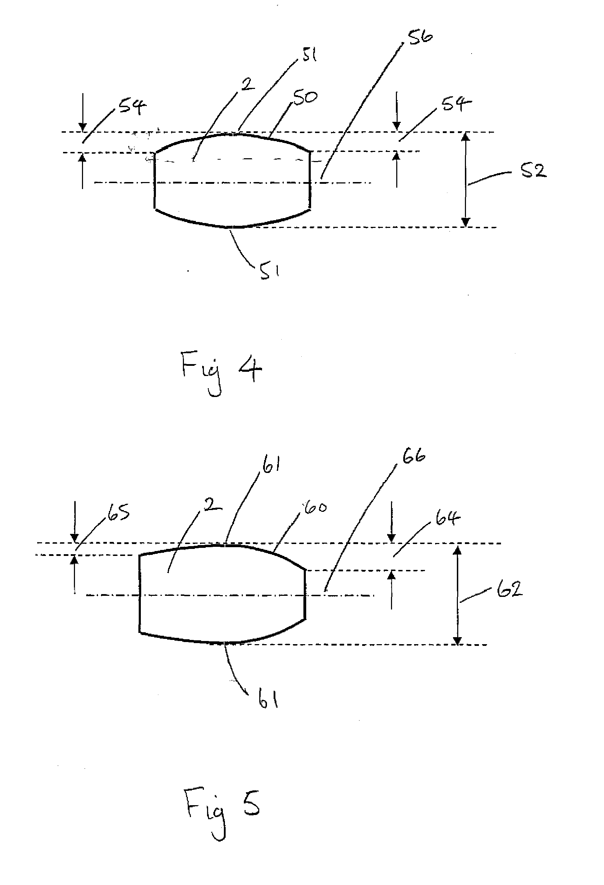

A first interference surface formed on a mounting is for engagement with a second interference surface 50, 60 of a pin 2. Figures 4 and 5 show longitudinal sections through exemplary contoured second interference surfaces 50, 60 for pin and mounting assemblies.
Figures 4 and 5 are schematic representations only and are not to scale.

The first and/or second interference surface of the pin and mounting assembly may define an open ended volume, a longitudinal axis 56, 66 of the interference fit extending through the volume. In the examples of figures 4 and 5 the open ended volume, and hence the second interference surface 50, 60 is substantially cylindrical, the interference depth varying by a small amount as a function of distance along the length of the longitudinal axis 56, 66.

It will be appreciated that in alternative embodiments the first and/or second interference surface may define an open ended volume which is a frustum or a cuboid.

The diameter 52, 62 of the cylindrical pin 2 is larger than the diameter of the corresponding first interference surface by an amount equal to the interference depth. For example the first interference surface may define a cylinder of 185 millimetre diameter and the pin may have a diameter 52, 62 of 185 millimetres plus 115 micrometres, the radial interference depth being 57.5 micrometres at its maximum.

A section through at least a part of the first and/or second interference surface along the longitudinal axis 56, 66 may describe a curve with at least one maximum and/or minimum.

The interference depth of at least a part of the first and/or second interference surface may vary in a parabolic fashion along the longitudinal axis 56, 66 of the interference fit.

The second interference surfaces 50, 60 of figures 4 and 5 define interference depths that are at a maximum 51, 61 midway along the length of the longitudinal axes. The overall interference depths define a convex shape. In alternative embodiments the maximum interference depths may not be midway along the length of the longitudinal axes, but may be at any point on the interference surface.

It will be appreciated by those skilled in the art that the interference depth of at least a part of the first and/or second interference surface maybe either substantially convex or substantially concave along the longitudinal axis of the interference fit.

Referring specifically to figure 4, the interference depth of the second interference surface 50 is reduced at each end of the interference surface along the longitudinal axis by an interference depth variation 54. The variation 54 is equal at both ends and is less than the maximum interference depth. For example in one embodiment the maximum radial interference depth may be 102.5 micrometres and the variation 54 may be 30 micrometres.

Figure 5 shows an alternative embodiment in which the reduction in the interference depth is different at each end of the interference surface. In the embodiment of figure 5 the interference depth variation 64 is greater than the interference depth variation 65. For example the maximum radial interference depth may be 125 micrometres and interference depth variation 64 may be 48 micrometres and interference depth 65 may be 19 micrometres.

Alternatively, the minimum interference depth may be defined as a percentage of the maximum interference depth.

In preferred embodiments the minimum interference depth may be less than 80% of the maximum interference depth. In another preferred embodiment the minimum interference depth may be less than 60%.

In another preferred embodiment the minimum interference depth may be greater than 30%. In yet another preferred embodiment the minimum interference depth may be greater than 50%.

The examples shown in figures 4 and 5 show contoured second interference surfaces which have been modified to better distribute the radial stresses in interference fits of a pin and mounting assembly. The skilled worker will appreciate that corresponding modifications could be made to the first interference surface, or to both the first and second interference surfaces.

In figures 1 to 5 the first interference surface is shown as female and includes an inner surface of a sleeve formed by the mounting; the second interference surface is shown as male and includes a part of an outer surface of a pin. Other configurations of interference fit are possible within the scope of the claims, however. For example the first interference surface may be male and may include the outer surface of a protrusion from the mounting, and the second interference surface be female and may include an inner surface of a sleeve formed in the pin.

In certain embodiments the mounting may be part of a housing. In alternative embodiments the mounting may be part of a gear carrier.

It is to be understood that a first and/or second interference surface, a longitudinal section through which describes a curve with at least one maximum and/or minimum, is distinct from any variation of the surface due to manufacturing variations or surface roughness. The mean contribution to the overall profile of the first and/or second interference surface caused by surface roughness will be approximately zero when taken over a substantial part of the length of the interference fit. Conversely, variations intentionally introduced to the first and/or second interference surface to produce a contoured shape will have a cumulative effect over a substantial part of the length of the interference fit to alter the profile of the surface in comparison to a uniform interference fit. The total cumulative effect of the intentional variations may be an order of magnitude greater than those caused by the surface roughness.

Put another way, the variations in the surface due to roughness represent "high-frequency" small amplitude variations in the first and/or second interference surface as compared with the relatively "low-frequency" large amplitude variations to shape a contoured profile.

The surface roughness of a machined surface may be defined by either Rₐ or R_{z} as shown below.

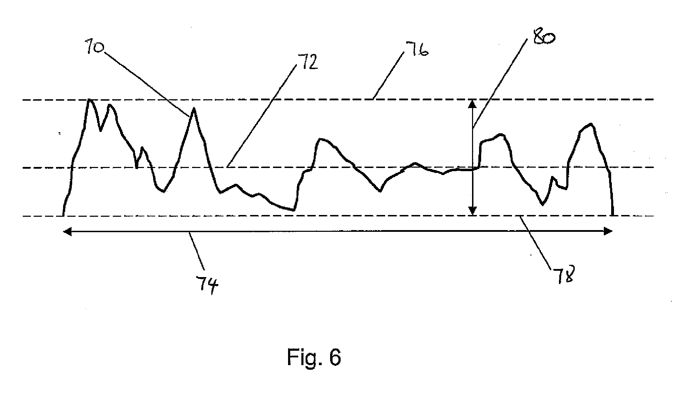

Referring to figure 6 a machined surface 70 will have a mean relative value 72 and maximum upper 76 and lower 78 values over a given distance 74. The distance 74 will preferably be a distance small enough that intentional variations in the profile of the machined surface do not impact on the mean relative value 72.

Rₐ can be defined as the root mean square value of all the areas of the machined surface 70 which lie above the mean relative value 72. R_{z} can be defined as the distance 80 between the upper 76 and lower 78 limits of the machined surface 70.

The contoured nature of the interference depth of the first and/or second interference surface may be defined as a curve having absolute or precise values with tolerances either side. The tolerance band may preferably specify the allowable errors in machining the first and/or second interference surface to a specific profile. The roughness of the surfaces may be measured with a spherical ended probe. The radius of the spherical end of the probe is large compared to the peaks and troughs in the machined surface and will hence only rest on some maximum points and measure the combined profile of the higher peaks.

Referring to figures 4, 5 and 6 the typical interference depth variation of the curved or parabolic interference surface 54, 64, 65 will preferably be approximately an order of magnitude greater than the R_{z} of the machined surface of the first and/or second interference surface.

With normal machining, grinding on the shaft and fine boring in the bore it would be expected to achieve surface finishes with an Rₐ of approximately 0.8 micrometres or better. This equates to an R_{z} value of approximately 4 micrometres or better. With more accurate methods it may be expected that an Rₐ of 0.4 could be achieved, equating to an approximate R_{z} of 2 micrometres.

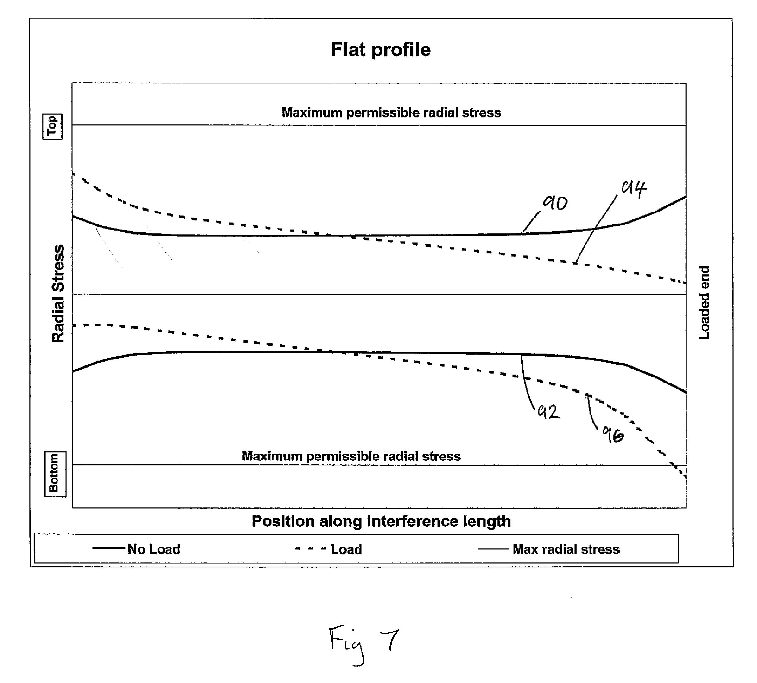

Figures 7 to 9 show the results of modelling simulations based on three separate interference depth profiles. The radial stresses are measured along the length of an interference surface at points coincident with a plane parallel to the direction of an applied force and which passes through the central axis of the pin.

The top of the interference fit is defined as a line along the first and/or second interference surface coincident with the plane and on the side of the fit to which the load is applied. The bottom of the interference fit is defined as the line along the first and/or second interference surface coincident with the plane and opposite the top of the interference fit. The radial stresses at the "loaded end" of the fit, i.e. the end which is closest to the applied load, are shown at the far right hand side of figures 7, 8 and 9. The radial stresses at the "unloaded end" of the fit are shown at the left hand side of figures 7, 8 and 9.

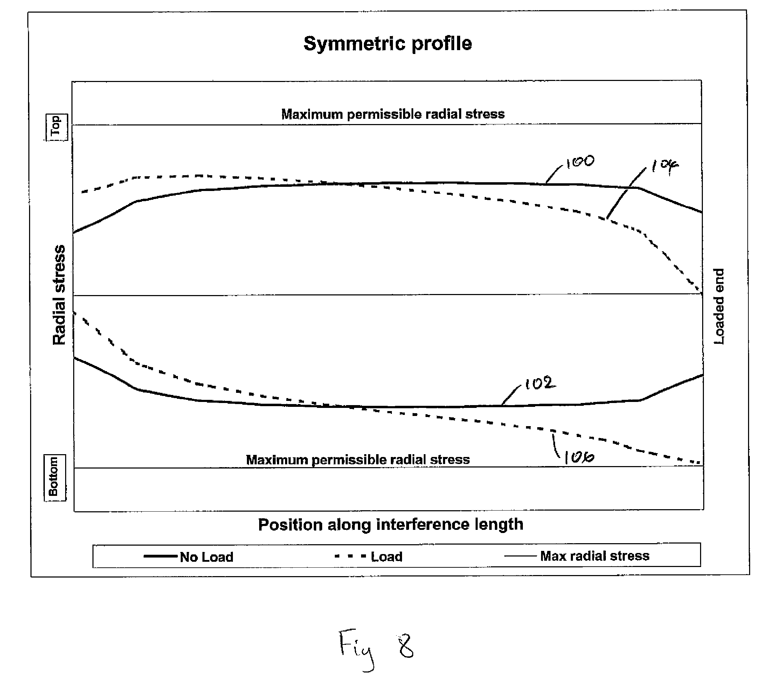

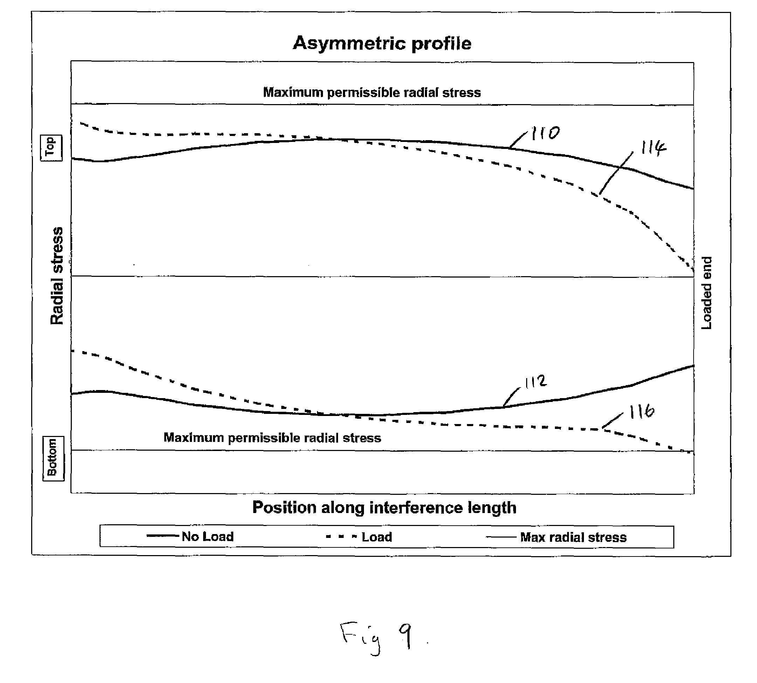

The plots in figures 7 to 9 represent simulated data on interference fits with a length of 90 millimetres and where the diameter of the pin, minus the interference depth, is 185 millimetres. The uniform interference fit represented in figure 7 has a substantially uniform radial interference depth of 57.5 micrometres. The contoured interference fit of figure 8 has a maximum radial interference depth of 102.5 micrometres with a first and/or second interference surface according to figure 4 in which the maximum interference depth variation 54 is 30 micrometres. The contoured interference fit of figure 9 has a maximum radial interference depth of 125 micrometres and has a first and/or second interference surface according to figure 5 in which interference depth variation 64 is 48 micrometres and the interference depth variation 65 is 19 micrometres.

Figure 7 shows the radial stresses seen in a uniform interference fit. Solid lines 90, 92 show the radial stresses in the interference fit when the pin is under no load. Dashed lines 94, 96 show the radial stresses in the fit when the pin is subjected to a load of 310 kilo Newtons at a distance of 400 millimetres from the fit.

It can be seen from figure 7 that when a load is applied to the pin the radial stresses at the loaded end of the fit decrease at the top and increase at the bottom. Conversely, the radial stresses seen at the unloaded end of the fit increase at the top and decrease at the bottom.

It is an important design factor when considering the profile of the first and/or second interference surfaces that the radial stresses do not exceed the maximum permissible radial stresses as this may lead to plastic deformation of the pin and/or the mounting. Additionally, it is desirable that the radial stresses do not decrease to the degree that there is little or no radial stress to produce interference fit.

The maximum permissible radial stress can be calculated based on the characteristics of the materials used in the manufacture of the pin and/or the mounting. The maximum permissible radial stress may be the plastic yield stress of the weakest material used.

It is also desirable to achieve the maximum radial stress without exceeding the permissible radial stress limits expressed above so as to maximise the resistance of the interference fit to shear motion, i.e. the removal of the pin from the mounting. This results in a stronger interference fit.

When loaded, the radial stresses at the bottom of the loaded end of the fit 96 just slightly exceed the maximum permissible radial stress.

In figure 7 the total interference fit can be represented as the area between solid lines 90 and 92. These are the radial stresses in the top and bottom of the fit which are coincident with a plane parallel to the direction of the applied force and which passes through the central axis of the pin.

The total interference fit may be normalised to a unitary value relating to a nominal interference fit. The nominal interference fit is that which arises from a substantially uniform interference depth and is one in which the amount of radial stress is maximised in an unloaded state but does not exceed calculated maximum permissible radial stresses of the interference fit when under load. The uniform interference fit of figure 7 closely resembles a nominal interference fit and is used as a comparison with the contoured interference fits shown in figures 8 and 9.

In the analysis of improvements in total interference fit provided below comparisons are made with the nominal interference fit described above. The nominal interference fit provides the benchmark for the definition of total interference fits of interference fits with varying or contoured interference depths.

Figure 8 expresses the same information as that expressed in figure 7 but with a contoured interference fit according to figure 4.

When under no load the radial stresses 100, 102 can be seen to be increased from those of figure 7 across the majority of the fit. In fact the total radial stresses in the interference fit, when expressed as the area between solid lines 100 and 102, show an increase by a factor of approximately 1.6 from those seen in figure 7. Additionally, figure 8 shows that when under load the radial stresses in the bottom of the loaded end of the interference fit 106 do not exceed the maximum permissible radial stress.

Figure 9 shows the radial stresses in a contoured interference fit according to that shown in figure 5. A further increase in the total interference fit over that of figure 8 can be seen when expressed as the area between the solid lines 110 and 112. The total radial stresses in figure 8 show an increase on those of figure 7 by a factor of approximately 1.9. The radial stresses in the bottom of the loaded end of the fit are significantly decreased over those in figure 7.

Figures 7 to 9 show that contoured interference fits in which the profile of the first and/or second interference surface are substantially according to either of figures 4 and 5 advantageously permit a greater total interference fit when unloaded while keeping the radial stresses within maximum permissible limits when under load.

This is demonstrated in the table provided below:

| Surface profile | Uniform | | As figure 4 | | As figure 5 | |
|---|---|---|---|---|---|---|
| | No load | Load | No load | Load | No load | Load |
| Relative indication of total interference fit | 9136.22 | 9155.49 | 14663 | 14749.7 | 17606.8 | 17692.1 |
| % total | 100 | 100 | 160 | 161 | 193 | 194 |

In the table the amount of radial stress in the uniform interference fit of figure 7 is given a value of 100%. The table shows that the amount of radial stress in the contoured pins of figures 8 and 9 is increased by approximately 160% and 190% respectively. These figures apply both to the unloaded and the loaded pin simulations.

The profile of the first and/or second interference surface may be designed in order to increase or maximise the total interference fit while keeping radial stresses or other measurable forces within maximum permissible limits when loaded.

The designer of a contoured interference fit may begin by calculating the maximum permissible forces within the interference fit. Calculating the maximum permissible forces within an interference fit may be based on the characteristics of the materials used in the interference fit.

A simulation model of a uniform interference fit is produced. The first and/or second interference surfaces of the modelled uniform interference fit are then modified or shaped such that the profile of the modelled first and/or second interference surface is contoured e.g. defines a curve or parabola along a longitudinal axis of the fit, the curve or parabola having at least one maximum. Exemplary profiles are provided in figures 4 and 5.

The model is executed and the forces in the contoured interference fit are calculated. The forces are calculated when the fit is under no load and when the fit is under load. The simulated load may be the maximum load likely to be experienced when the pin is in use.

The calculated forces in the contoured interference fit are analysed. It is desirable to achieve the maximum total interference fit without the forces in the interference fit exceeding the calculated maximum permissible forces. The profile of the first and/or second interference surface is adjusted and the model is executed as many times as is required such that the desired forces are achieved in the interference fit.

Once a profile of the first and/or second interference surface produces calculated forces within the modelled interference fit which match or are close to the desired forces, the elements of the actual interference fit may be manufactured.

In this way a contoured interference fit can be designed and implemented in which the total interference fit is greater than that of a nominal interference fit. The total interference fit of the invention may be greater than the total interference fit of a nominal interference fit by at least a factor of 1.2, at least a factor of 1.6 or at least a factor of 1.9.

The better distribution of the radial stresses occurring in the contoured interference fit leads to a reduction in the peak radial stresses experienced when the pin is under load, whilst permitting a greater total interference fit.

Other embodiments are intentionally within the scope of the appended claims.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A pin and mounting assembly for supporting a gear of an epicyclic or parallel shaft transmission, the pin and mounting assembly comprising:
a mounting having a first interference surface; and
a pin having a second interference surface, wherein the second interference surface is adapted for engagement with the first interference surface to establish an interference fit,
and wherein the first and/or second interference surface defines an open ended volume, a longitudinal axis of the interference fit extending through the volume, and a section through at least a part of the first and/or second interference surface on the longitudinal axis describes a curved interference depth with at least one maximum and/or minimum.

2. A pin and mounting assembly according to claim 1 wherein the interference depth of at least a part of the first and/or second interference surface is substantially convex along the longitudinal axis of the interference fit.

3. A pin and mounting assembly according to claim 1 wherein the interference depth of at least a part of the first and/or second interference surface is substantially concave along the longitudinal axis of the interference fit.

4. A pin and mounting assembly according to any preceding claim wherein the minimum interference depth of the at least part of the first and/or second interference surface is less than 80% of the maximum interference depth.

5. A pin and mounting assembly according to any preceding claim wherein the minimum interference depth of the at least part of the first and/or second interference surface is greater than 30% of the maximum interference depth.

6. A pin and mounting assembly according to any preceding claim wherein the total interference fit is increased by at least a factor of 1.2 over a nominal interference fit.

7. A pin and mounting assembly according to any preceding claim wherein the first interference surface includes the inner surface of a sleeve.

8. A pin and mounting assembly according to any preceding claim wherein the second interference surface includes the outer surface of the pin.

9. A pin and mounting assembly according to any preceding claim wherein the open ended volume formed by the first and/or second interference surface is cylindrical.

10. A pin and mounting assembly according to any preceding claim wherein the open ended volume formed by the first and/or second interference surface is a frustum.

11. A pin and mounting assembly according to any preceding claim wherein the mounting forms part of a housing.

12. A pin and mounting assembly according to any preceding claim wherein the mounting forms part of a gear carrier.

13. A pin for use in a pin and mounting assembly according to any preceding claim.

14. A mounting for use in a pin and mounting assembly according to any preceding claim.

15. A method of manufacturing a pin and mounting assembly for supporting a gear of an epicyclic or parallel shaft transmission, the method comprising:
providing a mounting having a first interference surface; and
providing a pin having a second interference surface, wherein the second interference surface is adapted for engagement with the first interference surface to establish an interference fit,
and wherein the first and/or second interference surface defines an open ended volume, a longitudinal axis of the interference fit extending through the volume, and a section through at least a part of the first and/or second interference surface on the longitudinal axis describes a curved interference depth with at least one maximum and/or minimum.

16. A method according to claim 15 including the step of determining the profile of the curved interference depth with at least one maximum and/or minimum using finite element analysis techniques.

17. A method for determining the profile of a first and/or second interference surface of a contoured interference fit for achieving a greater total interference fit and better distribution of forces within the contoured interference fit under load, the method comprising:
a) determining maximum permissible forces within an interference fit;
b) producing a model of a uniform interference fit wherein the first and/or second interference surface defines an open ended volume, a longitudinal axis of the interference fit extending through the volume, and a section through at least a part of the first and/or second interference surface on the longitudinal axis describes an interference depth;
c) shaping the profile of a first and/or second interference surface of the modelled interference fit such that an interference depth is defined with at least one maximum and/or minimum to produce a model of a contoured interference fit;
d) executing the model of the contoured interference fit and calculating the simulated forces in the contoured interference fit;
e) repeating steps c) and d) until desired calculated forces, which do not exceed the maximum permissible forces, are achieved in the contoured interference fit; and
f) manufacturing the first and/or second interference surfaces of an actual interference fit to correspond to the modelled contoured interference fit.

18. A method according to claim 17 wherein the step of calculating the maximum permissible forces within an interference fit is based on the characteristics of the materials used in the interference fit.

19. A method according to claim 17 or 18 wherein the desired forces include an increase in the total interference fit of at least a factor of 1.2.
